# EUROPÄISCHE PATENTSCHRIFT

(11) **EP 4 273 575 B1**
(45) Veröffentlichungstag und Bekanntmachung des Hinweises auf die Patenterteilung: **29.10.2025**
(21) Anmeldenummer: 22171422.3
(22) Anmeldetag: 03.05.2022
(51) Int. Cl.: G01S 7/48, G01S 17/42, G01S 17/89, G01S 7/487, G06F 30/13

(54) **VERFAHREN UND VORRICHTUNGEN ZUR FEHLERERKENNUNG IN 3D-PUNKTWOLKEN**
METHOD AND DEVICES FOR ERROR DETECTION IN 3D POINT CLOUDS
PROCÉDÉ ET DISPOSITIFS DE DÉTECTION DE DÉFAUTS DANS DES NUAGES DE POINTS 3D

(43) Veröffentlichungstag der Anmeldung: 08.11.2023
(73) Patentinhaber: RIEGL Laser Measurement Systems GmbH, 3580 Horn (AT)
(72) Erfinder: STUDNICKA, Nikolaus, 1190 Wien (AT); ULLRICH, Andreas, 3003 Gablitz (AT)
(74) Vertreter: Weiser Voith Gugler Patentanwälte Partnerschaft

(56) Entgegenhaltungen:
- WO-A1-2021/231996
- US-A1- 2020 309 898
- US-B2- 10 810 734

## Beschreibung

Die vorliegende Erfindung betrifft Verfahren und Vorrichtungen zur Fehlererkennung in 3D-Punktwolken, die mit einem Laserscanner erstellt worden sind.

Beim Laserscannen wird die Umgebung des Laserscanners mit ein oder mehreren Lasermessstrahlen abgetastet. Aus Laufzeitmessungen an den von den Abtastpunkten der Umgebung reflektierten Lasermessstrahlen werden die Entfernungen zu den Abtastpunkten ermittelt und - in Kenntnis des Aussendeorts und der Aussenderichtung des jeweiligen Lasermessstrahls - die Abtastpunkte in einem Koordinatensystem als 3D-Punktwolke aufgestellt. Enthält die Umgebung jedoch spiegelnd reflektierende Objekte, beispielsweise Glasflächen oder spiegelnde Fassadenteile, dann treten fehlerhafte Spiegel-Abtastpunkte in der 3D-Punktwolke auf, die nämlich vom Laserscanner aus gesehen hinter der spiegelnden Oberfläche zu liegen scheinen, obwohl sie tatsächlich spiegelsymmetrisch vor der spiegelnden Oberfläche liegen.

Derzeit werden 3D-Punktwolken aufwendig manuell um solche Spiegel-Abtastpunkte fehlerkorrigiert. Der Benutzer identifiziert und markiert dazu beispielsweise in einer Bildschirmdarstellung der 3D-Punktwolke spiegelnd reflektierende Oberflächen, z.B. Fensterflächen, und die Software löscht dann alle dahinter aufscheinenden Spiegel-Abtastpunkte.

Die WO 2021/231996 A1 beschreibt eine Detektion einer Glasfläche in einer von einem Scanner vermessenen Umgebung anhand fehlender Abtastpunkte in einem die Glasfläche enthaltenden Winkelbereich. Die US 2020/0309898 A1 betrifft die Korrektur von Mehrfachreflexionen in einem ToF-Sensor. Die US 10,810,734 B2 offenbart die Überprüfung einer Stahlbeton-Struktur durch Vergleichen eines BIM-Modells der Soll-Struktur mit einer Kamera-vermessenen 3D-Punktwolke der Ist-Struktur.

Die Erfindung setzt sich zum Ziel, Verfahren und Vorrichtungen zum Erkennen von fehlerhaften oder potenziell fehlerhaften Abtastpunkten in 3D-Punktwolken von Umgebungen mit spiegelnd reflektierenden Oberflächen zu schaffen.

Dieses Ziel wird in einem ersten Aspekt der Erfindung mit einem Verfahren zur Fehlererkennung in einer 3D-Punktwolke erreicht, die eine zumindest ein Objekt enthaltende Umgebung in einem Koordinatensystem abbildet und durch Laserscannen der Umgebung mit ein oder mehreren Lasermessstrahlen erzeugt worden ist, bei welchem Laserscannen aus Laserentfernungsmessungen zwischen dem Aussendeort des jeweiligen Lasermessstrahls und dem von ihm getroffenen Abtastpunkt der Umgebung die Abtastpunkte als 3D-Punktwolke im Koordinatensystem aufgestellt worden sind, wobei sich das Verfahren gemäß der Erfindung auszeichnet durch:
Zurverfügungstellen der 3D-Punktwolke im Koordinatensystem in einer digitalen Form, die für jeden Abtastpunkt auch den Aussendeort des diesen Abtastpunkt getroffen habenden Lasermessstrahls enthält;
Zurverfügungstellen eines von der 3D-Punktwolke gesonderten digitalen 3D-Modells zumindest einer Oberfläche des Objekts im Koordinatensystem, wobei das digitale 3D-Modell entweder nur spiegelnd reflektierende Oberflächen enthält oder für jede Oberfläche eine zugehörige Reflexionsangabe enthält;
für zumindest einen Abtastpunkt der 3D-Punktwolke, dessen Verbindungsgerade zum Aussendeort des ihn getroffen habenden Lasermessstrahls eine der Oberflächen des 3D-Modells schneidet:
   wenn das digitale 3D-Modell nur spiegelnd reflektierende Oberflächen enthält, Erkennen dieses Abtastpunkts als fehleranfällig, d.h. als möglicherweise an einem bezüglich der von seiner Verbindungsgerade geschnittenen Oberfläche gespiegelten Ort liegend, oder
   wenn das digitale 3D-Modell für jede Oberfläche eine zugehörige Reflexionsangabe enthält, Überprüfen, ob die Reflexionsangabe der von seiner Verbindungsgeraden geschnittenen Oberfläche ein vorgebbares Kriterium erfüllt und, wenn ja: Erkennen dieses Abtastpunkts als fehlerhaft, d.h. als an einem bezüglich der von seiner Verbindungsgerade geschnittenen Oberfläche gespiegelten Ort liegend.

Die Erfindung beruht auf der Erkenntnis, dass vorhandene digitale 3D-Modelle von Objekten, wie Gebäuden, dazu verwendet werden können, in einer 3D-Punktwolke, die ein solches Objekt abbildet, Abtastpunkte, die möglicherweise Spiegelungsfehlern unterliegen bzw. darauf zurückzuführen sind, als potenziell fehlerhaft, d.h. fehleranfällig, zu erkennen. Für die solcherart erkannten Abtastpunkte können dann weitere Maßnahmen getroffen werden, beispielsweise eine automatische Markierung, wie eine deutlich sichtbare Kennzeichnung in einer Bildschirmdarstellung der 3D-Punktwolke zur manuellen Nachbearbeitung oder Korrektur, oder für eine automatische Korrektur wie später beschrieben.

In einer besonders einfachen Variante des Verfahrens enthält das digitale 3D-Modell nur jene Oberflächen des Objekts, die spiegelnd sind und überhaupt zu fehlerhaften Abtastpunkten führen könnten. Indem für jeden Abtastpunkt der 3D-Punktwolke überprüft wird, ob seine Verbindungsgerade zum Aussendeort seines Lasermesstrahls eine dieser Oberflächen des 3D-Modells schneidet, können solche fehleranfälligen Abtastpunkte automatisch erkannt werden.

In einer besonders vorteilhaften Variante des Verfahrens, welche mit 3D-Modellen funktioniert, die noch weitere, nichtspiegelnde Oberflächen enthalten, enthält das 3D-Modell für jede darin enthaltene Oberfläche zusätzlich eine dieser Oberfläche zugeordnete Reflexionsangabe und es wird für jeden als fehleranfällig erkannten Abtastpunkt überprüft, ob die Reflexionsangabe der von seiner Verbindungsgeraden geschnittenen Oberfläche ein vorgebbares Kriterium erfüllt. Wenn ja, wird dieser Abtastpunkt nicht nur als fehleranfällig, sondern als fehlerhaft erkannt und kann dann beispielsweise in der 3D-Punktwolke entsprechend markiert werden.

In beiden Varianten kann das erfindungsgemäße Erkennungsverfahren auch zu einem automatischen Korrekturverfahren erweitert werden. In einer ersten Ausführungsform dieses Korrekturverfahrens wird jeder als fehleranfällig oder fehlerhaft erkannte Abtastpunkt einfach aus der 3D-Punktwolke gelöscht. Diese Ausführungsform kann z.B. nützlich sein, wenn vor oder neben dem interessierenden Objekt liegende Umgebungsbereiche, die durch die Spiegelung zufällig "mitgescannt" wurden, ausgeblendet werden sollen.

In einer zweiten Ausführungsform kann das Korrekturverfahren der Erfindung die als fehleranfällig oder fehlerhaft erkannten Abtastpunkte sogar richtigstellen. Diese Ausführungsform bereinigt die 3D-Punktwolke nicht nur um Fehlmessungen, sondern erzeugt sogar zusätzliche Abtastpunkte von Umgebungsbereichen vor oder neben den spiegelnden Oberflächen des gescannten Objekts, beispielsweise zusätzliche Abtastpunkte der Straße davor oder von anderen Gebäuden oder Objekten, die in einem Winkel zu den spiegelnden Oberflächen des gescannten Objekts stehen.

In einer weiteren bevorzugten Ausgestaltung der Erfindung ist die Reflexionsangabe eine Materialangabe der Oberfläche und das Kriterium das Fallen des angegebenen Materials in eine vorgegebene Materialklasse. Beispielsweise ist die genannte Oberfläche die Außenseite einer Fensterverglasung und das 3D-Modell enthält für das Fenster die Materialangabe "getöntes Glas", welche in die allgemeinere Materialklasse "Glas" fällt.

In einer zweiten bevorzugten Ausgestaltung der Erfindung ist die Reflexionsangabe ein Spiegelreflektivitätswert der Oberfläche und das Kriterium das Überschreiten eines vorgegebenen Schwellwerts durch den angegebenen Spiegelreflektivitätswert. Beispielsweise enthält das 3D-Modell zu jeder darin definierten Oberfläche, z.B. einer Fassadenplatte, einen prozentuellen Spiegelreflektivitätswert für sichtbares oder InfrarotLicht.

Bevorzugt ist das 3D-Modell Teil eines sog. Building Information Model (BIM) nach dem IFC-Standard, wie es schon vielerorts für neuerrichtete Gebäude verfügbar ist. Das erfindungsgemäße Verfahren ist damit besonders für den Einsatz in Neu- oder Umbaugebieten, zur Endkontrolle von Baustellen usw. geeignet.

In weiterer Ausgestaltung umfasst das Verfahren der Erfindung auch den vorhergehenden Schritt des Laserscannens der Umgebung mit ein oder mehreren Lasermessstrahlen, um aus Laserentfernungsmessungen zwischen dem Aussendeort des jeweiligen Lasermessstrahls und dem von ihm getroffenen Abtastpunkt der Umgebung die Abtastpunkte als die 3D-Punktwolke im Koordinatensystem aufzustellen.

In einem zweiten Aspekt schafft die Erfindung eine Vorrichtung zur Fehlererkennung einer 3D-Punktwolke, die eine zumindest ein Objekt enthaltende Umgebung in einem Koordinatensystem abbildet und durch Laserscannen der Umgebung mit ein oder mehreren Lasermessstrahlen erzeugt worden ist, bei welchem Laserscannen aus Laserentfernungsmessungen zwischen dem Aussendeort des jeweiligen Lasermessstrahls und dem von ihm getroffenen Abtastpunkt der Umgebung die Abtastpunkte als 3D-Punktwolke im Koordinatensystem aufgestellt worden sind, wobei sich die Vorrichtung gemäß der Erfindung auszeichnet durch:
einen ersten Speicher zur Aufnahme der 3D-Punktwolke im Koordinatensystem in einer digitalen Form, die für jeden Abtastpunkt auch den Aussendeort des diesen Abtastpunkt getroffen habenden Lasermessstrahls enthält;
einen zweiten Speicher zur Aufnahme eines von der 3D-Punktwolke digitalen 3D-Modells zumindest einer Oberfläche des Objekts im Koordinatensystem, wobei das digitale 3D-Modell entweder nur spiegelnd reflektierende Oberflächen enthält oder für jede Oberfläche eine zugehörige Reflexionsangabe enthält; und
einen an den ersten und den zweiten Speicher angeschlossenen Prozessor, welcher dafür ausgebildet ist,
für zumindest einen Abtastpunkt der 3D-Punktwolke, dessen Verbindungsgerade zum Aussendeort des ihn getroffen habenden Lasermessstrahls eine der Oberflächen des 3D-Modells schneidet,
   wenn das digitale 3D-Modell nur spiegelnd reflektierende Oberflächen enthält, diesen Abtastpunkt als fehleranfällig, d.h. als möglicherweise an einem bezüglich der von seiner Verbindungsgerade geschnittenen Oberfläche gespiegelten Ort liegend, zu erkennen, oder
   wenn das digitale 3D-Modell für jede Oberfläche eine zugehörige Reflexionsangabe enthält, zu überprüfen, ob die Reflexionsangabe der von dessen Verbindungsgerade geschnittenen Oberfläche ein vorgebbares Kriterium erfüllt und, wenn ja, diesen Abtastpunkt als fehlerhaft, d.h. als an einem bezüglich der von seiner Verbindungsgerade geschnittenen Oberfläche gespiegelten Ort liegend, zu erkennen.

In einem dritten Aspekt schafft die Erfindung eine Vorrichtung in Form eines Computerprogrammprodukts, welches das erfindungsgemäße Verfahren implementiert.

Bezüglich der Vorteile und bevorzugter Merkmale der Vorrichtungen der Erfindung wird auf die obigen Ausführungen zum Verfahren verwiesen.

Die Erfindung wird nachstehend anhand von in den beigeschlossenen Zeichnungen dargestellten Ausführungsbeispielen näher erläutert. In den Zeichnungen zeigt:
Fig. 1 die Vorrichtung der Erfindung beim Laserscannen einer Umgebung in einer schematischen Perspektivansicht;
Fig. 2 die Reflexionsverhältnisse eines Lasermessstrahls der Vorrichtung von Fig. 1 an einer spiegelnden Oberfläche eines Objekts in der Umgebung;
Fig. 3 die Vorrichtung der Erfindung in einem Blockschaltbild;
Fig. 4 das Verfahren der Erfindung in einem Flussdiagramm;
Fig. 5 eine 2D-Ansicht einer beispielhaften 3D-Punktwolke; und
Fig. 6 eine 2D-Ansicht eines 3D-Modells eines Objekts, das bei den Verfahren und Vorrichtungen der Erfindung verwendet wird.

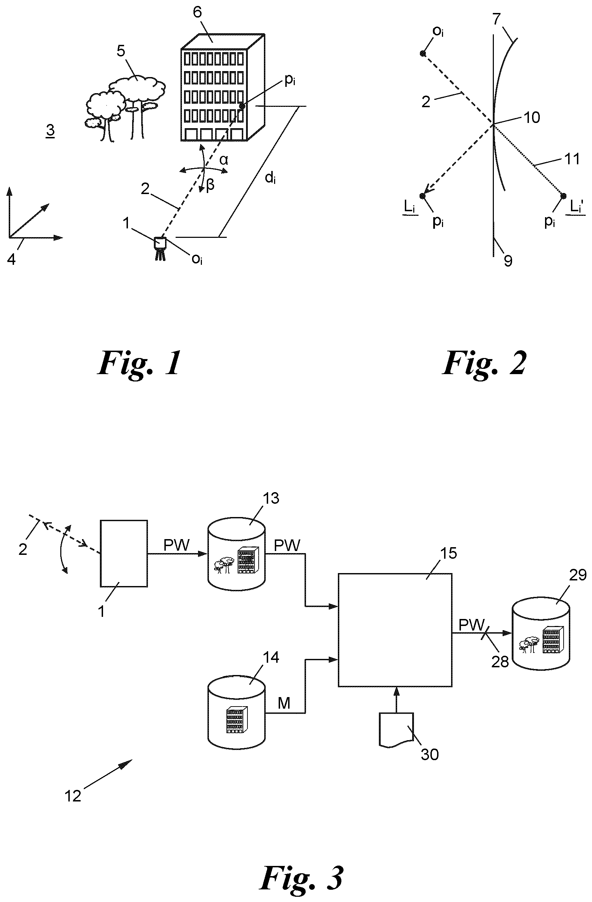

In Fig. 1 ist ein Laserscanner 1 gezeigt, der mit einem oder mehreren Lasermessstrahlen 2 eine Umgebung 3 abtastet. Beispielsweise wird ein einziger Lasermessstrahl 2 über einen Raumwinkel (α, β) in zwei Dimensionen, z.B. zeilen- und spaltenweise, über die Umgebung 3 geschwenkt. Zusätzlich - oder auch anstelle einer der Schwenkdimensionen - könnte der Laserscanner 1 auch gegenüber der Umgebung 3 bewegt werden.

Aus Entfernungsmessungen des Lasermessstrahls 2, beispielsweise Laufzeitmessungen an darin enthaltenen Laserimpulsen, zum jeweiligen Abtastpunkt p₁, p₂, ..., allgemein pᵢ, der Umgebung 3, den der Lasermessstrahl 2 gerade trifft, können die Entfernungen dᵢ vom jeweiligen Aussendeort oᵢ des Lasermessstrahls 2 zum jeweiligen Abtastpunkt pᵢ gemessen werden. In Kenntnis des jeweiligen Aussendeorts oᵢ und der jeweiligen Aussenderichtung (αᵢ, βᵢ) des Lasermessstrahls 2 in einem Koordinatensystem 4 sowie der gemessenen Entfernung dᵢ können dann die Abtastpunkte pᵢ im Koordinatensystem 4 aufgestellt bzw. verortet werden.

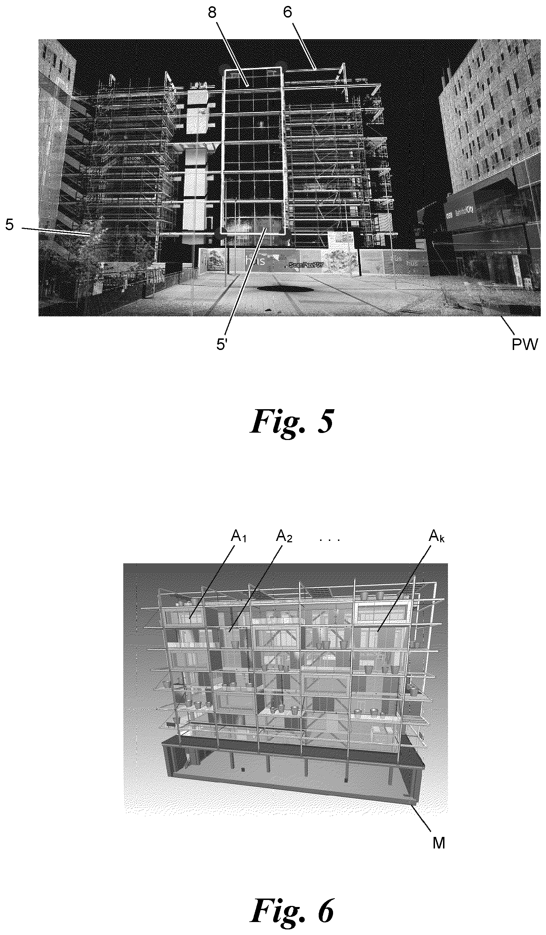

Eine Vielzahl solcherart vermessener Abtastpunkte pᵢ stellt eine Punktwolke PW im Koordinatensystem 4 dar, welche die Umgebung 3 abbildet. Fig. 5 zeigt ein Beispiel einer solchen Punktwolke PW mit mehreren Objekten darin, beispielsweise Bäumen 5 und Gebäuden 6 in einer Landschaft.

Wenn der Lasermessstrahl 2 eine spiegelnd reflektierende Oberfläche 7 (Fig. 2) eines Objekts 5, 6 der Umgebung 3 trifft, beispielsweise die Außenoberfläche einer Fensterverglasung 8 oder einer Fassadenplatte des Gebäudes 6, dann vermisst der Lasermessstrahl 2 aufgrund der spiegelnden Reflexion an der Oberfläche 7 einen Abtastpunkt pᵢ an einem Ort Lᵢ der Umgebung 3, der vom Laserscanner 1 aus gesehen vor der spiegelnden Oberfläche 7 liegt. Da die Abtastpunkte pᵢ in der Punktwolke PW jedoch auf Basis des jeweiligen Aussendeorts oᵢ und der jeweiligen Aussenderichtung (αᵢ, βᵢ) des Lasermessstrahls 2 aufgestellt werden, kommt der reale Abtastpunkt pᵢ der Umgebung 3 in der Punktwolke PW scheinbar an einem bezüglich der spiegelnden Oberfläche 7 gespiegelten Ort Lᵢ' zu liegen, siehe Fig. 2. Wie in Fig. 5 gezeigt, erscheinen damit in der Punktwolke PW beispielsweise vor oder neben dem Gebäude 6 stehende Bäume als "Spiegel-Bäume" 5' im Gebäude 6.

Wie in Fig. 2 im Detail gezeigt, erscheinen die fehlerhaften Abtastpunkte ("Spiegel-Abtastpunkte") pᵢ in der Punktwolke PW jeweils an einem Ort Lᵢ', der spiegelsymmetrisch zum tatsächlichen Ort Lᵢ des Abtastpunkts pᵢ der Umgebung 3 bezüglich einer Tangentialebene 9 liegt, die an die Oberfläche 7 im Auftreffpunkt des Lasermessstrahls 2 gelegt wird. Der Auftreffpunkt des Lasermessstrahls 2 auf der Oberfläche 7 kann einfach als Schnittpunkt 10 der Verbindungsgerade *o̅ᵢ̅p̅ᵢ̅* bzw. 11 zwischen Aussendeort oᵢ des Lasermessstrahls 2 und Abtastpunkt pᵢ am Spiegel-Ort Lᵢ in der 3D-Punkwolke PW ermittelt werden.

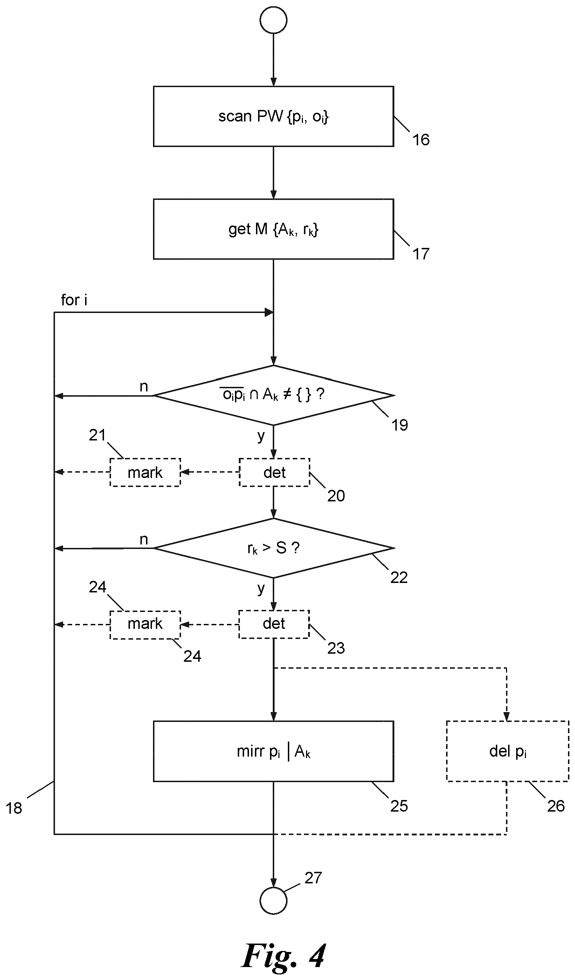

Um solche fehlerhaften - oder zumindest potenziell fehlerhaften - Abtastpunkte pᵢ in der Punktwolke PW zu erkennen und optional automatisch zu korrigieren, werden eine Vorrichtung 12 gemäß Fig. 3 bzw. ein Verfahren gemäß Fig. 4 eingesetzt. Die Vorrichtung und das Verfahren der Fig. 3 und 4 beruhen auf der Verwendung eines digitalen 3D-Objekt M des oder der Objekte 6, wie es beispielsweise in Fig. 6 dargestellt ist. Das 3D-Modell M ist beispielsweise Bestandteil eines Building Information Model (BIM) nach dem Standard IFC (Industry Foundation Classes), z.B. nach der Norm ISO 16739, oder beruht auf einem solchen BIM.

Das 3D-Modell M enthält für jede reflektierende Oberfläche 7 des oder der Objekte 6 - im weiteren werden diese Oberflächen 7 mit A₁, A₂, ..., allgemein Aₖ, bezeichnet - eine zugehörige Reflexionsangabe rₖ. Bei der Reflexionsangabe rₖ einer Oberfläche Aₖ kann es sich um einen binären Spiegelreflektivitätswert (spiegelnd reflektierend: ja/nein) handeln, um einen graduellen Spiegelreflektivitätswert, z.B. einen prozentuellen Spiegelreflektivitätswert von 0% (diffus reflektierend) bis 100% (spiegelnd reflektierend), oder um eine Materialangabe (Mauerwerk, Stein, Beton, Glas, Holz, Metall usw.), aus der auf einen Spiegelreflektivitätswert geschlossen werden kann (z.B. Holz: diffus reflektierend, Glas: spiegelnd reflektierend usw.).

Ein prozentueller Spiegelreflektivitätswert kann beispielsweise das Verhältnis von gerichteter ("spiegelnder") Reflexion zu diffuser Reflexion an der Oberfläche 7 bzw. Aₖ angeben, z.B. als Verhältnis der in einer zur Auftreffrichtung eines vorgegebenen Lasermessstrahls 2 spiegelbildlichen Abstrahlrichtung gemessenen Abstrahlleistung der Oberfläche 7 bzw. Aₖ am Auftreffpunkt 10 zu der gesamten, über einen Halbkugelraum um den Auftreffpunkt 10 aufsummierten Abstrahlleistung der Oberfläche 7 bzw. Aₖ.

In einer vereinfachten Ausführungsform kann das 3D-Modell M auch genau nur jene Oberflächen Aₖ des oder der Objekte 6 enthalten, welche spiegelnd reflektierend sind, beispielsweise nur alle Fensterflächen. Die Reflexionsangaben rₖ im Modell M können dann entfallen. Beispielsweise werden in das Modell M nur jene Oberflächen Aₖ aufgenommen, deren Material in eine spiegelnd reflektierende Materialklasse fällt oder deren Spiegelreflektivitätswert einen vorgegebenen Schwellwert übersteigt.

Die in Fig. 3 gezeigte Vorrichtung 12 zur Fehlererkennung und (optionalen) Fehlerkorrektur einer mit Spiegelfehlern behafteten 3D-Punktwolke PW umfasst gemäß Fig. 3 einen an den Ausgang des Laserscanners 1 angeschlossenen ersten Speicher 13 zur Aufnahme der fehlerbehafteten 3D-Punktwolke PW und einen zweiten Speicher 14 zur Aufnahme des 3D-Modells M. An die beiden Speicher 13, 14 ist ein Prozessor 15 angeschlossen, welcher zur Fehlerkorrektur das anhand von Fig. 4 beschriebene Verfahren ausführt.

Gemäß Fig. 4 wird in einem ersten Schritt 16 die fehlerbehaftete 3D-Punktwolke PW mit Hilfe des Laserscanners 1 erstellt. Dabei wird zu jedem Abtastpunkt pᵢ der jeweils zugehörige Aussendeort oᵢ des diesen ursächlich getroffen habenden Lasermessstrahls 2 in der 3D-Punktwolke PW (bzw. einer entsprechenden digitalen Speicherform derselben) mitgespeichert.

Im Schritt 17, der vor, gleichzeitig mit oder nach dem Schritt 16 durchgeführt werden kann, wird das 3D-Modell M aus dem Speicher 14 geholt. Das 3D-Modell M enthält wie erörtert entweder nur jene Oberflächen Aₖ, die spiegelnd reflektierend sind, so dass sie potenziell zu fehlerhaften Abtastpunkten pᵢ führen könnten, oder alle bzw. beliebige Oberflächen Aₖ des bzw. der Objekte 6. In letzterem Fall enthält das 3D-Modell M für jede darin gespeicherte Oberfläche Aₖ die zugeordnete Reflexionsangabe rₖ.

Anschließend wird für jeden Abtastpunkt pᵢ der 3D-Punktwolke PW - siehe Schleife 18 über Index i - im Schritt 19 überprüft, ob die Verbindungsgerade 11 (*o̅ᵢ̅p̅ᵢ̅)* zwischen Abtastpunkt pᵢ und zugehörigem Aussendeort oᵢ eine der im 3D-Modell M enthaltenen Oberflächen Aₖ - gegebenenfalls unter Berücksichtigung einer geometrischen Toleranz - schneidet. Wenn nicht (Zweig "n" des Verzweigungsschrittes 19), dann wird die Schleife 18 fortgesetzt. Wenn ja (Zweig "y" des Verzweigungsschrittes 19), dann gibt es mehrere Möglichkeiten.

In einer ersten Ausführungsform wird der Abtastpunkt pᵢ als (potenziell) fehlerhaft ("fehleranfällig") erkannt (Schritt 20) und die Verarbeitung des Abtastpunkts pᵢ könnte hier bereits enden, z.B. für eine anschließende manuelle Überprüfung oder Korrektur dieses Abtastpunkts pᵢ in der 3D-Punktwolke PW. Optional könnte der solcherart erkannte Abtastpunkt pᵢ in der 3D-Punktwolke PW markiert werden (Schritt 21), z.B. mit einem Flag, das bei einer visuellen Betrachtung der 3D-Punktwolke PW z.B. auf einem Bildschirm für den Benutzer deutlich sichtbar ist. In der ersten Ausführungsform wird die Schleife 18 nach dem Schritt 20 und dem optionalen Schritt 21 sogleich fortgesetzt, bis alle Abtastpunkte pᵢ auf diese Weise überprüft, gegebenenfalls als fehleranfällig erkannt und optional markiert worden sind.

Die erste Ausführungsform ist besonders für solche 3D-Modelle M geeignet, die überhaupt nur jene Oberflächen Aₖ enthalten, welche spiegelnd reflektierend sind. Denn hier genügt bereits die Überprüfung in Schritt 19, ob die Verbindungsgerade 11 des jeweiligen Abtastpunkts pᵢ überhaupt eine der im 3D-Modell M enthaltenen Oberflächen Aₖ schneidet, für die Erkennung, ob es sich um einen fehleranfälligen Abtastpunkt pᵢ handelt.

In einer zweiten Ausführungsform wird für einen im Schritt 19 als fehleranfällig erkannten Abtastpunkt pᵢ in einem nachfolgenden Schritt 22 eine zusätzliche Überprüfung durchgeführt, und zwar indem zusätzlich die Reflexionseigenschaften der von der Verbindungsgeraden 11 geschnittenen Oberfläche Aₖ untersucht werden. Diese Ausführungsform ist besonders für solche 3D-Modelle M geeignet, welche zu jeder darin enthaltenen Oberfläche Aₖ eine zugeordnete Reflexionsangabe rₖ enthalten.

Im Schritt 22 wird überprüft, ob die zur geschnittenen Oberfläche Aₖ im 3D-Modell M gespeicherte Reflexionsangabe rₖ ein vorgebbares Kriterium erfüllt. Bei dem Kriterium kann es sich beispielsweise um das Überschreiten eines vorgebbaren Schwellwerts S handeln, wenn die Reflexionsangabe rₖ ein binärer oder gradueller, z.B. prozentueller, Spiegelreflektivitätswert ist. Bei einem prozentuellen Spiegelreflektivitätswert von 0% - 100% als Reflexionsangabe rₖ kann der Schwellwert S beispielsweise 1% - 30%, bevorzugt 5% - 20%, besonders bevorzugt 10% - 15% sein.

Wenn hingegen die Reflexionsangabe rₖ eine Materialangabe der Oberfläche Aₖ ist, z.B. "Glas", "getöntes Glas", "verspiegeltes Glas", "poliertes Metall" usw., dann kann das im Schritt 20 überprüfte Kriterium darin bestehen, dass das angegebene Material in eine vorgegebene oder vorgebbare Materialklasse, z.B. "Glas", "Metall", "Glas und Metall", usw. fällt.

Ist das im Schritt 22 überprüfte Kriterium nicht erfüllt (Zweig "n"), wird die Schleife 18 fortgesetzt. Ist es hingegen erfüllt (Zweig "y"), dann gibt es zwei Möglichkeiten:
In einer ersten Variante wird der Abtastpunkt pᵢ als fehlerhaft erkannt (Schritt 23), z.B. für eine allfällige spätere manuelle Überprüfung oder Korrektur, und die Schleife 18 fortgesetzt. Optional kann der als fehlerhaft erkannte Abtastpunkt pᵢ im Schritt 24 markiert werden, bevor die Schleife 18 fortgesetzt wird, bis alle Abtastpunkte pᵢ der 3D-Punktwolke PW überprüft, gegebenenfalls als fehlerhaft erkannt und (optional) markiert worden sind.
In einer zweiten Variante wird die 3D-Punktwolke PW gleich um die als fehlerhaft erkannten Abtastpunkte pᵢ korrigiert bzw. bereinigt. Zur Korrektur wird in einem an den Erkennungsschritt 23 anschließenden Schritt 25 der fehlerhafte, an seinem Spiegelort Lᵢ' liegende Abtastpunkt pᵢ bezüglich der Tangentialebene 9 an die Oberfläche Aₖ im Schnittpunkt 10 der Verbindungsgerade 11 gespiegelt und an seiner gespiegelten Position Lᵢ in der 3D-Punktwolke PW neu aufgestellt.

Anstelle des Neuaufstellens des Abtastpunkts pᵢ im Schritt 25 könnte der fehlerhafte Abtastpunkt pᵢ auch einfach aus der 3D-Punktwolke PW gelöscht werden, siehe Schritt 26.

Wenn die zusätzliche Überprüfung des Schrittes 22 entfällt, können die Korrektur- bzw. Löschschritte 25, 26 auch direkt an den Schritt 19 bzw. 20 anschließen, insbesondere wenn das 3D-Modell M nur die spiegelnd reflektierenden Oberflächen Aₖ enthält.

Nach dem Schritt 25 bzw. 26 wird die Schleife 18 fortgesetzt, bis alle Abtastpunkte pᵢ der 3D-Punktwolke PW - jeweils hinsichtlich aller in Frage kommenden Oberflächen Aₖ im Schritt 19 - überprüft worden sind. Dann ist das Verfahren abgeschlossen (Schritt 27) und die Punktwolke PW fehlerkorrigiert und kann auf einem Ausgang 28 des Prozessors 15 ausgegeben werden, z.B. in einen Speicher 29.

Es versteht sich, dass das in Fig. 4 dargestellte Verfahren auch auf andere Weise programmiert sein kann. Beispielsweise kann für das Auffinden jener Oberfläche Aₖ, welche von der jeweiligen Verbindungsgerade 11 bzw. *o̅ᵢ̅p̅ᵢ̅* geschnitten wird, jedes in der Technik bekannte Raytracing-Verfahren verwendet werden.

Das offenbarte Verfahren kann als Hardwarelösung in die Vorrichtung 12, insbesondere den Prozessor 15, einprogrammiert sein, z.B. durch Gestaltung des Prozessors 15 als entsprechend ausgebildeter ASIC-Chip. Alternativ ist das Verfahren als Programmanweisung in einem Computerprogrammprodukt 30 codiert, welches einen als programmsteuerbarer Computer ausgeführten Prozessor 15 steuert.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Verfahren zur Fehlererkennung in einer 3D-Punktwolke, die eine zumindest ein Objekt (6) enthaltende Umgebung (3) in einem Koordinatensystem (4) abbildet und durch Laserscannen der Umgebung (3) mit ein oder mehreren Lasermessstrahlen (2) erzeugt worden ist, bei welchem Laserscannen aus Laserentfernungsmessungen (dᵢ) zwischen dem Aussendeort (oᵢ) des jeweiligen Lasermessstrahls (2) und dem von ihm getroffenen Abtastpunkt (pᵢ) der Umgebung (3) die Abtastpunkte (dᵢ) als 3D-Punktwolke (PW) im Koordinatensystem (4) aufgestellt worden sind, umfassend:
Zurverfügungstellen der 3D-Punktwolke (PW) im Koordinatensystem (4) in einer digitalen Form, die für jeden Abtastpunkt (pᵢ) auch den Aussendeort (oᵢ) des diesen Abtastpunkt (pᵢ) getroffen habenden Lasermessstrahls (2) enthält;
**gekennzeichnet durch**:
Zurverfügungstellen eines von der 3D-Punktwolke (PW) gesonderten digitalen 3D-Modells (M) zumindest einer Oberfläche (Aₖ) des Objekts (6) im Koordinatensystem (4), wobei das digitale 3D-Modell (M) entweder nur spiegelnd reflektierende Oberflächen (Aₖ) enthält oder für jede Oberfläche (Aₖ) eine zugehörige Reflexionsangabe (rₖ) enthält;
für zumindest einen Abtastpunkt (pᵢ) der 3D-Punktwolke (PW), dessen Verbindungsgerade (11) zum Aussendeort (oᵢ) des ihn getroffen habenden Lasermessstrahls (2) eine der Oberflächen (Aₖ) des 3D-Modells (M) schneidet:
wenn das digitale 3D-Modell (M) nur spiegelnd reflektierende Oberflächen (Aₖ) enthält, Erkennen dieses Abtastpunkts (pᵢ) als fehleranfällig, d.h. als möglicherweise an einem bezüglich der von seiner Verbindungsgerade (11) geschnittenen Oberfläche (Aₖ) gespiegelten Ort (Lᵢ') liegend, oder
wenn das digitale 3D-Modell (M) für jede Oberfläche (Aₖ) eine zugehörige Reflexionsangabe (rₖ) enthält, Überprüfen, ob die Reflexionsangabe (rₖ) der von seiner Verbindungsgeraden (11) geschnittenen Oberfläche (Aₖ) ein vorgebbares Kriterium erfüllt und, wenn ja: Erkennen dieses Abtastpunkts (pᵢ) als fehlerhaft, d.h. als an einem bezüglich der von seiner Verbindungsgerade (11) geschnittenen Oberfläche (Aₖ) gespiegelten Ort (Lᵢ') liegend.

2. Verfahren nach Anspruch 1, umfassend, für jeden erkannten Abtastpunkt (pᵢ):
Löschen dieses Abtastpunkt (pᵢ) aus der 3D-Punktwolke (PW).

3. Verfahren nach Anspruch 1, umfassend, für jeden erkannten Abtastpunkt (pᵢ):
Neuaufstellen dieses Abtastpunkts (pᵢ) in der 3D-Punktwolke (PW) durch Spiegeln des Abtastpunkts (pᵢ) bezüglich einer Tangentialebene (9) an die von seiner Verbindungsgerade (11) geschnittene Oberfläche (Aₖ) im Schnittpunkt (10) der Verbindungsgerade (11).

4. Verfahren nach einem der Ansprüche 1 bis 3, **dadurch gekennzeichnet, dass** die Reflexionsangabe (rₖ) eine Materialangabe der Oberfläche (Aₖ) und das Kriterium das Fallen des angegebenen Materials in eine vorgegebene Materialklasse ist.

5. Verfahren nach einem der Ansprüche 1 bis 3, **dadurch gekennzeichnet, dass** die Reflexionsangabe (rₖ) ein Spiegelreflektivitätswert der Oberfläche und das Kriterium das Überschreiten eines vorgegebenen Schwellwerts (S) durch den angegebenen Spiegelreflektivitätswert ist.

6. Verfahren nach einem der Ansprüche 1 bis 5, **dadurch gekennzeichnet, dass** das 3D-Modell (M) Teil eines Building Information Model nach dem IFC-Standard ist.

7. Verfahren nach einem der Ansprüche 1 bis 6, ferner umfassend:
Laserscannen der Umgebung (3) mit ein oder mehreren Lasermessstrahlen (2), um aus Laserentfernungsmessungen (dᵢ) zwischen dem Aussendeort (oᵢ) des jeweiligen Lasermessstrahls (2) und dem von ihm getroffenen Abtastpunkt (pᵢ) der Umgebung (3) die Abtastpunkte (pᵢ) als die 3D-Punktwolke (PW) im Koordinatensystem (4) aufzustellen.

8. Vorrichtung zur Fehlererkennung in einer 3D-Punktwolke, die eine zumindest ein Objekt (6) enthaltende Umgebung (3) in einem Koordinatensystem (4) abbildet und durch Laserscannen der Umgebung (3) mit ein oder mehreren Lasermessstrahlen (2) erzeugt worden ist, bei welchem Laserscannen aus Laserentfernungsmessungen (dᵢ) zwischen dem Aussendeort (oᵢ) des jeweiligen Lasermessstrahls (2) und dem von ihm getroffenen Abtastpunkt (pᵢ) der Umgebung (3) die Abtastpunkte (pᵢ) als 3D-Punktwolke (PW) im Koordinatensystem (4) aufgestellt worden sind, umfassend:
einen ersten Speicher (13) zur Aufnahme der 3D-Punktwolke (PW) im Koordinatensystem (4) in einer digitalen Form, die für jeden Abtastpunkt (pᵢ) auch den Aussendeort (oᵢ) des diesen Abtastpunkt (pᵢ) getroffen habenden Lasermessstrahls (2) enthält;
**gekennzeichnet durch**:
einen zweiten Speicher (14) zur Aufnahme eines von der 3D-Punktwolke (PW) gesonderten digitalen 3D-Modells (M) zumindest einer Oberfläche (Aₖ) des Objekts (6) im Koordinatensystem (4), wobei das digitale 3D-Modell (M) entweder nur spiegelnd reflektierende Oberflächen (Aₖ) enthält oder für jede Oberfläche (Aₖ) eine zugehörige Reflexionsangabe (rₖ) enthält; und
einen an den ersten und den zweiten Speicher (13, 14) angeschlossenen Prozessor (15), welcher dafür ausgebildet ist,
für zumindest einen Abtastpunkt (pᵢ) der 3D-Punktwolke (PW), dessen Verbindungsgerade (11) zum Aussendeort (oᵢ) des ihn getroffen habenden Lasermessstrahls (2) eine der Oberflächen (Aₖ) des 3D-Modells (M) schneidet,
wenn das digitale 3D-Modell (M) nur spiegelnd reflektierende Oberflächen (Aₖ) enthält, diesen Abtastpunkt (pᵢ) als fehleranfällig, d.h. als möglicherweise an einem bezüglich der von seiner Verbindungsgerade (11) geschnittenen Oberfläche (Aₖ) gespiegelten Ort (Lᵢ') liegend, zu erkennen, oder
wenn das digitale 3D-Modell (M) für jede Oberfläche (Aₖ) eine zugehörige Reflexionsangabe (rₖ) enthält, zu überprüfen, ob die Reflexionsangabe (rₖ) der von dessen Verbindungsgerade (11) geschnittenen Oberfläche (Aₖ) ein vorgebbares Kriterium erfüllt und, wenn ja, diesen Abtastpunkt (pᵢ) als fehlerhaft, d.h. als an einem bezüglich der von seiner Verbindungsgerade (11) geschnittenen Oberfläche (Aₖ) gespiegelten Ort (Lᵢ') liegend, zu erkennen.

9. Vorrichtung nach Anspruch 8, **dadurch gekennzeichnet, dass** der Prozessor (15) dafür ausgebildet ist, jeden erkannten Abtastpunkt (pᵢ) aus der 3D-Punktwolke (PW) zu löschen.

10. Vorrichtung nach Anspruch 8, **dadurch gekennzeichnet, dass** der Prozessor (15) dafür ausgebildet ist, jeden erkannten Abtastpunkt (pᵢ) in der 3D-Punktwolke (PW) durch Spiegeln dieses Abtastpunkts (pᵢ) bezüglich einer Tangentialebene (9) an die von seiner Verbindungsgeraden (11) geschnittene Oberfläche (Aₖ) im Schnittpunkt (10) der Verbindungsgerade (11) neuaufzustellen.

11. Vorrichtung nach einem der Ansprüche 8 bis 10, **dadurch gekennzeichnet, dass** die Reflexionsangabe (rₖ) eine Materialangabe der Oberfläche (Aₖ) und das Kriterium das Fallen des angegebenen Materials in eine vorgegebene Materialklasse ist.

12. Vorrichtung nach einem der Ansprüche 8 bis 10, **dadurch gekennzeichnet, dass** die Reflexionsangabe (rₖ) ein Spiegelreflektivitätswert der Oberfläche (Aₖ) und das Kriterium das Überschreiten eines vorgegebenen Schwellwerts (S) durch den angegebenen Spiegelreflektivitätswert ist.

13. Vorrichtung nach einem der Ansprüche 8 bis 12, ferner umfassend einen Laserscanner (1), ausgebildet zum Laserscannen der Umgebung (3) mit ein oder mehreren Lasermessstrahlen (2), um aus Laserentfernungsmessungen (dᵢ) zwischen dem Aussendeort (oᵢ) des jeweiligen Lasermessstrahls (2) und dem von ihm getroffenen Abtastpunkt (pᵢ) der Umgebung (3) die Abtastpunkte (pᵢ) als die 3D-Punktwolke (PW) im Koordinatensystem (4) aufzustellen.

14. Computerprogrammprodukt, implementierend ein Verfahren nach einem der Ansprüche 1 bis 7.

## Claims

1. A method for error detection in a 3D point cloud which maps an environment (3) containing at least one object (6) in a coordinate system (4) and which has been generated by laser scanning the environment (3) with one or more laser measurement beams (2), in which laser scanning the scanning points (dᵢ) have been set up as a 3D point cloud (PW) in the coordinate system (4) from laser distance measurements (dᵢ) between the emission location (oᵢ) of the respective laser measurement beam (2) and the scanning point (pᵢ) of the environment (3) hit by it, comprising:
providing the 3D point cloud (PW) in the coordinate system (4) in a digital form which also contains, for each scanning point (pᵢ), the emission location (oᵢ) of the laser measurement beam (2) having hit this scanning point (pᵢ);
**characterized by**:
providing a digital 3D model (M), separate from the 3D point cloud (PW), of at least one surface (Aₖ) of the object (6) in the coordinate system (4), wherein the digital 3D model (M) either contains only specularly reflecting surfaces (Aₖ) or contains an associated reflection indication (rₖ) for each surface (Aₖ) ;
for at least one scanning point (pᵢ) of the 3D point cloud (PW), the connecting straight line (11) of which to the emission location (oᵢ) of the laser measurement beam (2) having hit it intersects one of the surfaces (Aₖ) of the 3D model (M):
when the digital 3D model (M) contains only specularly reflecting surfaces (Aₖ), detecting this scanning point (pᵢ) as susceptible to error, i.e. as possibly lying at a location (Lᵢ') which is mirrored with respect to the surface (Aₖ) intersected by its connecting straight line (11), or
when the digital 3D model (M) contains an associated reflection indication (rₖ) for each surface (Aₖ), checking whether the reflection indication (rₖ) of the surface (Aₖ) intersected by its connecting straight line (11) fulfils a criterion that can be predetermined and, if so: detecting this scanning point (pᵢ) as faulty, i.e. as lying at a location (Lᵢ') which is mirrored with respect to the surface (Aₖ) intersected by its connecting straight line (11).

2. The method according to claim 1, comprising, for each detected scanning point (pᵢ):
deleting this scanning point (pᵢ) from the 3D point cloud (PW).

3. The method according to claim 1, comprising, for each detected scanning point (pᵢ):
newly setting up this scanning point (pᵢ) in the 3D point cloud (PW) by mirroring the scanning point (pᵢ), with respect to a tangential plane (9), to the surface (Aₖ) intersected by its connecting straight line (11) at the intersection point (10) of the connecting straight line (11).

4. The method according to any one of claims 1 to 3, **characterized in that** the reflection indication (rₖ) is a material indication of the surface (Aₖ) and the criterion is the belonging of the indicated material to a predetermined material class.

5. The method according to any one of claims 1 to 3, **characterized in that** the reflection indication (rₖ) is a mirror reflectivity value of the surface and the criterion is the exceeding of a predetermined threshold value (S) by the indicated mirror reflectivity value.

6. The method according to any one of claims 1 to 5, **characterized in that** the 3D model (M) is part of a building information model according to the IFC standard.

7. The method according to any one of claims 1 to 6, further comprising:
laser scanning the environment (3) with one or more laser measurement beams (2) in order to set up the scanning points (pᵢ) as the 3D point cloud (PW) in the coordinate system (4) from laser distance measurements (dᵢ) between the emission location (oᵢ) of the respective laser measurement beam (2) and the scanning point (pᵢ) of the environment (3) hit by it.

8. A device for error detection in a 3D point cloud which maps an environment (3) containing at least one object (6) in a coordinate system (4) and which has been generated by laser scanning the environment (3) with one or more laser measurement beams (2), in which laser scanning the scanning points (pᵢ) have been set up as a 3D point cloud (PW) in the coordinate system (4) from laser distance measurements (dᵢ) between the emission location (oᵢ) of the respective laser measurement beam (2) and the scanning point (pᵢ) of the environment (3) hit by it, comprising:
a first memory (13) for receiving the 3D point cloud (PW) in the coordinate system (4) in a digital form which also contains, for each scanning point (pᵢ), the emission location (oᵢ) of the laser measurement beam (2) having hit this scanning point (pᵢ);
**characterized by**:
a second memory (14) for receiving a digital 3D model (M), separate from the 3D point cloud (PW), of at least one surface (Aₖ) of the object (6) in the coordinate system (4), wherein the digital 3D model (M) either contains only specularly reflecting surfaces (Aₖ) or contains an associated reflection indication (rₖ) for each surface (Aₖ); and
a processor (15) which is connected to the first and the second memory (13, 14) and which is configured
for at least one scanning point (pᵢ) of the 3D point cloud (PW), the connecting straight line (11) of which to the emission location (oᵢ) of the laser measurement beam (2) having hit it intersects one of the surfaces (Aₖ) of the 3D model (M),
when the digital 3D model (M) contains only specularly reflecting surfaces (Aₖ), to detect this scanning point (pᵢ) as susceptible to error, i.e. as possibly lying at a location (Lᵢ') which is mirrored with respect to the surface (Aₖ) intersected by its connecting straight line (11), or
when the digital 3D model (M) contains an associated reflection indication (rₖ) for each surface (Aₖ), to check whether the reflection indication (rₖ) of the surface (Aₖ) intersected by its connecting straight line (11) fulfils a criterion that can be predetermined and, if so, to detect this scanning point (pᵢ) as faulty, i.e. as lying at a location (Lᵢ') which is mirrored with respect to the surface (Aₖ) intersected by its connecting straight line (11).

9. The device according to claim 8, **characterized in that** the processor (15) is configured to delete each detected scanning point (pᵢ) from the 3D point cloud (PW).

10. The device according to claim 8, **characterized in that** the processor (15) is configured to newly set up each detected scanning point (pᵢ) in the 3D point cloud (PW) by mirroring this scanning point (pᵢ) with respect to a tangential plane (9) to the surface (Aₖ) intersected by its connecting straight line (11) at the intersection point (10) of the connecting straight line (11).

11. The device according to any one of claims 8 to 10, **characterized in that** the reflection indication (rₖ) is a material indication of the surface (Aₖ) and the criterion is the belonging of the indicated material to a predetermined material class.

12. The device according to any one of claims 8 to 10, **characterized in that** the reflection indication (rₖ) is a mirror reflectivity value of the surface (Aₖ) and the criterion is the exceeding of a predetermined threshold value (S) by the indicated mirror reflectivity value.

13. The device according to any one of claims 8 to 12, further comprising a laser scanner (1) configured to laser scan the environment (3) with one or more laser measurement beams (2) in order to set up the scanning points (pᵢ) as the 3D point cloud (PW) in the coordinate system (4) from laser distance measurements (dᵢ) between the emission location (oᵢ) of the respective laser measurement beam (2) and the scanning point (pᵢ) of the environment (3) hit by it.

14. A computer program product implementing a method according to any one of claims 1 to 7.

## Revendications

1. Procédé pour la détection d'erreurs dans un nuage de points 3D qui représente un environnement (3) contenant au moins un objet (6) dans un système de coordonnées (4) et qui a été créé par balayage laser de l'environnement (3) avec un ou plusieurs faisceaux de mesure laser (2), dans lequel balayage laser, les points de balayage (dᵢ) ont été mis en place sous forme de nuage de points 3D (PW) dans le système de coordonnées (4) à partir de mesures d'éloignement laser (dᵢ) entre le lieu d'émission (oᵢ) du faisceau de mesure laser (2) respectif et le point de balayage (pᵢ) de l'environnement (3) frappé par celui-ci, comprenant :
la mise à disposition du nuage de points 3D (PW) dans le système de coordonnées (4) sous forme numérique qui contient, pour chaque point de balayage (pᵢ), également le lieu d'émission (oᵢ) du faisceau de mesure laser (2) ayant frappé ce point de balayage (pᵢ) ;
**caractérisé par** :
la mise à disposition d'un modèle 3D (M) numérique, séparé du nuage de points 3D (PW), d'au moins une surface (Aₖ) de l'objet (6) dans le système de coordonnées (4), dans lequel le modèle 3D (M) numérique contient soit uniquement des surfaces (Aₖ) réfléchissantes spéculaires soit une indication de réflexion (rₖ) correspondante pour chaque surface (Aₖ) ;
pour au moins un point de balayage (pᵢ) du nuage de points 3D (PW) dont la droite de liaison (11) vers le lieu d'émission (oᵢ) du faisceau de mesure laser (2) qui l'a frappé coupe une des surfaces (Aₖ) du modèle 3D (M) :
lorsque le modèle 3D (M) numérique ne contient que des surfaces (Aₖ) réfléchissantes spéculaires, la détection de ce point de balayage (pᵢ) comme étant sujet à erreur, c'est à dire comme se situant possiblement en un lieu (Lᵢ') réfléchi par rapport à la surface (Aₖ) coupée par sa droite de liaison (11), ou
lorsque le modèle 3D (M) numérique contient une indication de réflexion (rₖ) correspondante pour chaque surface (Aₖ), la vérification si l'indication de réflexion (rₖ) de la surface (Aₖ) coupée par sa droite de liaison (11) satisfait à un critère pouvant être prédéterminé, et, si oui : la détection de ce point de balayage (pᵢ) comme étant erroné, c'est-à-dire se situant en un lieu (Lᵢ') réfléchi par rapport à la surface (Aₖ) coupée par sa droite de liaison (11).

2. Procédé selon la revendication 1, comprenant, pour chaque point de balayage (pᵢ) détecté :
l'effacement de ce point de balayage (pᵢ) du nuage de points 3D (PW).

3. Procédé selon la revendication 1, comprenant, pour chaque point de balayage (pᵢ) détecté :
la nouvelle mise en place de ce point de balayage (pᵢ) dans le nuage de points 3D (PW) par la réflexion du point de balayage (pᵢ) par rapport à un plan tangentiel (9) sur la surface (Aₖ) coupée par sa droite de liaison (11) au point d'intersection (10) de la droite de liaison (11).

4. Procédé selon l'une des revendications 1 à 3, **caractérisé en ce que** l'indication de réflexion (rₖ) est une indication de matière de la surface (Aₖ) et le critère est le fait que la matière indiquée fait partie d'une classe de matières prédéterminée.

5. Procédé selon l'une des revendications 1 à 3, **caractérisé en ce que** l'indication de réflexion (rₖ) est une valeur de réflectivité spéculaire de la surface et le critère est le dépassement d'une valeur de seuil (S) prédéterminée par la valeur de réflectivité spéculaire indiquée.

6. Procédé selon l'une des revendications 1 à 5, **caractérisé en ce que** le modèle 3D (M) est un élément d'un modèle d'information de construction selon la norme IFC.

7. Procédé selon l'une des revendications 1 à 6, comprenant en outre :
le balayage laser de l'environnement (3) avec un ou plusieurs faisceaux de mesure laser (2) afin de mettre en place les points de balayage (pᵢ) sous forme du nuage de points 3D (PW) dans le système de coordonnées (4) à partir de mesures d'éloignement laser (dᵢ) entre le lieu d'émission (oᵢ) du faisceau de mesure laser (2) respectif et le point de balayage (pᵢ) de l'environnement (3) frappé par celui-ci.

8. Dispositif pour la détection d'erreurs dans un nuage de points 3D qui représente un environnement (3) contenant au moins un objet (6) dans un système de coordonnées (4) et qui a été créé par balayage laser de l'environnement (3) avec un ou plusieurs faisceaux de mesure laser (2), dans lequel balayage laser, les points de balayage (pᵢ) ont été mis en place sous forme de nuage de points 3D (PW) dans le système de coordonnées (4) à partir de mesures d'éloignement laser (dᵢ) entre le lieu d'émission (oᵢ) du faisceau de mesure laser (2) respectif et le point de balayage (pᵢ) de l'environnement (3) frappé par celui-ci, comprenant :
une première mémoire (13) pour l'enregistrement du nuage de points 3D (PW) dans le système de coordonnées (4) sous forme numérique qui contient, pour chaque point de balayage (pᵢ), également le lieu d'émission (oᵢ) du faisceau de mesure laser (2) ayant frappé ce point de balayage (pᵢ) ;
**caractérisé par** :
une deuxième mémoire (14) pour l'enregistrement d'un modèle 3D (M) numérique, séparé du nuage de points 3D (PW), d'au moins une surface (Aₖ) de l'objet (6) dans le système de coordonnées (4), dans lequel le modèle 3D (M) numérique contient soit uniquement des surfaces (Aₖ) réfléchissantes spéculaires soit une indication de réflexion (rₖ) correspondante pour chaque surface (Aₖ) ; et
un processeur (15) relié à la première et à la deuxième mémoire (13, 14), lequel est conçu,
pour au moins un point de balayage (pᵢ) du nuage de points 3D (PW) dont la droite de liaison (11) vers le lieu d'émission (oᵢ) du faisceau de mesure laser (2) qui l'a frappé coupe une des surfaces (Aₖ) du modèle 3D (M),
lorsque le modèle 3D (M) numérique ne contient que des surfaces (Aₖ) réfléchissantes spéculaires, pour la détection de ce point de balayage (pᵢ) comme étant sujet à erreur, c'est à dire comme se situant possiblement en un lieu (Lᵢ') réfléchi par rapport à la surface (Aₖ) coupée par sa droite de liaison (11), ou
lorsque le modèle 3D (M) numérique contient une indication de réflexion (rₖ) correspondante pour chaque surface (Aₖ), pour la vérification si l'indication de réflexion (rₖ) de la surface (Aₖ) coupée par sa droite de liaison (11) satisfait à un critère pouvant être prédéterminé, et, si oui, pour la détection de ce point de balayage (pᵢ) comme étant erroné, c'est-à-dire se situant en un lieu (Lᵢ') réfléchi par rapport à la surface (Aₖ) coupée par sa droite de liaison (11).

9. Dispositif selon la revendication 8, **caractérisé en ce que** le processeur (15) est conçu pour effacer chaque point de balayage (pᵢ) détecté du nuage de points 3D (PW).

10. Dispositif selon la revendication 8, **caractérisé en ce que** le processeur (15) est conçu pour la nouvelle mise en place de chaque point de balayage (pᵢ) détecté dans le nuage de points 3D (PW) par la réflexion de ce point de balayage (pᵢ) par rapport à un plan tangentiel (9) sur la surface (Aₖ) coupée par sa droite de liaison (11) au point d'intersection (10) de la droite de liaison (11).

11. Dispositif selon l'une des revendications 8 à 10, **caractérisé en ce que** l'indication de réflexion (rₖ) est une indication de matière de la surface (Aₖ) et le critère est le fait que la matière indiquée fait partie d'une classe de matières prédéterminée.

12. Dispositif selon l'une des revendications 8 à 10, **caractérisé en ce que** l'indication de réflexion (rₖ) est une valeur de réflectivité spéculaire de la surface (Aₖ) et le critère est le dépassement d'une valeur de seuil (S) prédéterminée par la valeur de réflectivité spéculaire indiquée.

13. Dispositif selon l'une des revendications 8 à 12, comprenant en outre un dispositif de balayage laser (1) conçu pour le balayage laser de l'environnement (3) avec un ou plusieurs faisceaux de mesure laser (2) afin de mettre en place les points de balayage (pᵢ) sous forme du nuage de points 3D (PW) dans le système de coordonnées (4) à partir de mesures d'éloignement laser (dᵢ) entre le lieu d'émission (oᵢ) du faisceau de mesure laser (2) respectif et le point de balayage (pᵢ) de l'environnement (3) frappé par celui-ci.

14. Produit-programme informatique mettant en œuvre un procédé selon l'une des revendications 1 à 7.
